Europäisches Patentamt

European Patent Office

Office européen des brevets

(19)

(11) Publication number: 0 295 902

A2

# (12) EUROPEAN PATENT APPLICATION

(21) Application number: 88305484.3

(22) Date of filing: 16.06.88

(51) Int. Cl.4: **F16D 13/71 , F16D 13/72**

(30) Priority: 16.06.87 GB 8713967

(43) Date of publication of application:
21.12.88 Bulletin 88/51

(84) Designated Contracting States:
DE FR GB

(71) Applicant: QUINTON HAZELL AUTOMOTIVE
LIMITED
Hazell Way Bermuda Road
Nuneaton Warwickshire, CV10 7QQ(GB)

(72) Inventor: Trotman, Steven
Roslyn The Green Snitterfield
Stratford-upon-Avon
Warwickshire,CV370JG(GB)
Inventor: Ball, David Edward
83 Jersey Close Church Hill North
Redditch Worcestershire, B98 9LT(GB)

(74) Representative: Jenkins, Peter David et al
Page White & Farrer 5 Plough Place New
Fetter Lane
London EC4A 1HY(GB)

(54) Mounting for a friction clutch pressure plate.

(57) A mounting for a pressure plate of a friction clutch, the mounting being adapted to be fixed between a cover assembly of the friction clutch and a flywheel, the mounting comprising first and second annular members of sheet material, which members have axially contoured surfaces, means for connecting the second annular member in opposed relation to the first annular member, the annular members being connected together such that spaces are provided therebetween for ventilating the clutch, and means for connecting the pressure plate to the mounting.

_Fig. 3_

## Mounting for a Friction Clutch Pressure Plate.

The present invention relates to a mounting for a pressure plate of a friction clutch. The friction clutch may be a friction clutch for a vehicle.

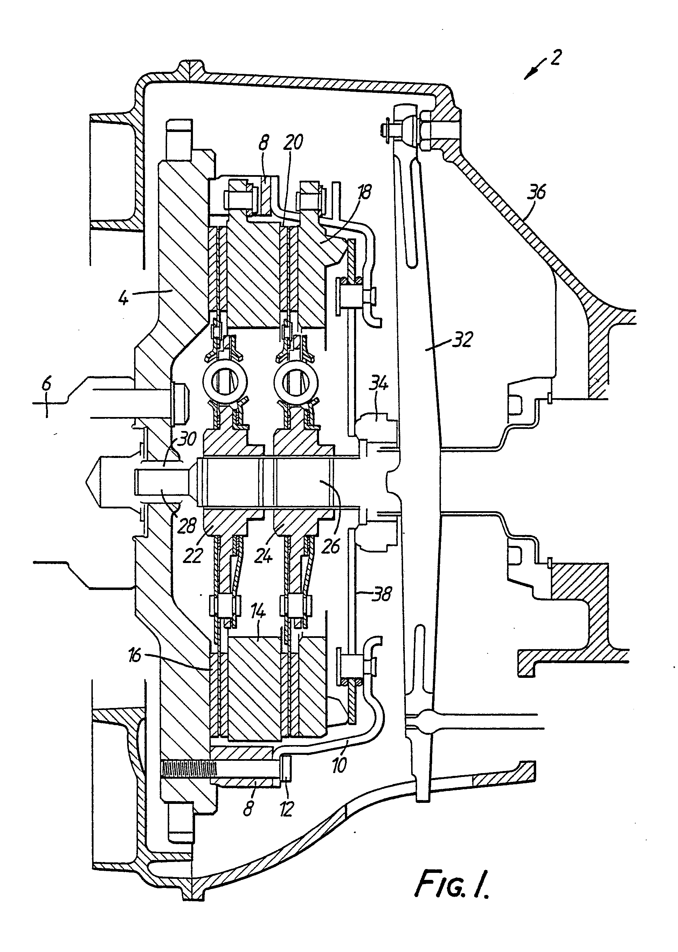

A known twin-plate friction clutch for a vehicle is illustrated in Figure 1. The friction clutch 2 includes a flywheel 4 which is mounted on an output shaft 6 of an internal combustion engine. An adaptor ring 8 is mounted on the flywheel 4 and a cover assembly 10 is mounted in turn on the adaptor ring 8. A series of bolts 12 fix the cover assembly 10 and the adaptor ring 8 to the flywheel 4. An intermediate pressure plate 14 is mounted on the adaptor ring 8 and a first driven plate 16 is disposed between the intermediate pressure plate 14 and the flywheel 4. A main pressure plate 18 is mounted on the cover assembly 10 and a second driven plate 20 is disposed between the main pressure plate 18 and the intermediate pressure plate 14. The first and second driven plates 16, 20 are connected to respective hubs 22, 24 which are splined onto an output shaft 26, one end 28 of which is rotatably supported in a bearing 30 in the flywheel 4. The clutch is engaged by the action of a release lever 32, which is actuated by release of a clutch pedal (not shown) which urges a release bearing 34 towards the flywheel 4. The release lever is mounted on a bell housing 36. The release bearing 34 in turn urges a diaphragm spring 38 towards the flywheel 4. The diaphragm spring 38 bears against the main pressure plate 18 and pushes, in turn, the main pressure plate 18, the second driven plate 20, the intermediate pressure plate 14, the first driven plate 16 and the flywheel 4 into engagement thereby to cause rotation of the output shaft 26.

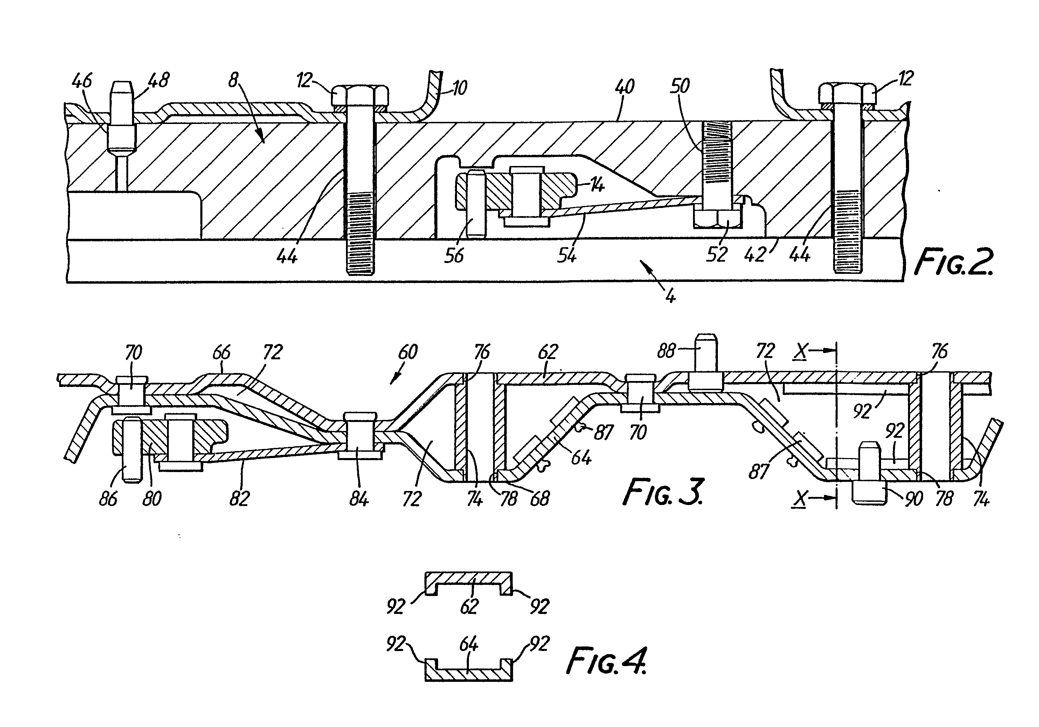

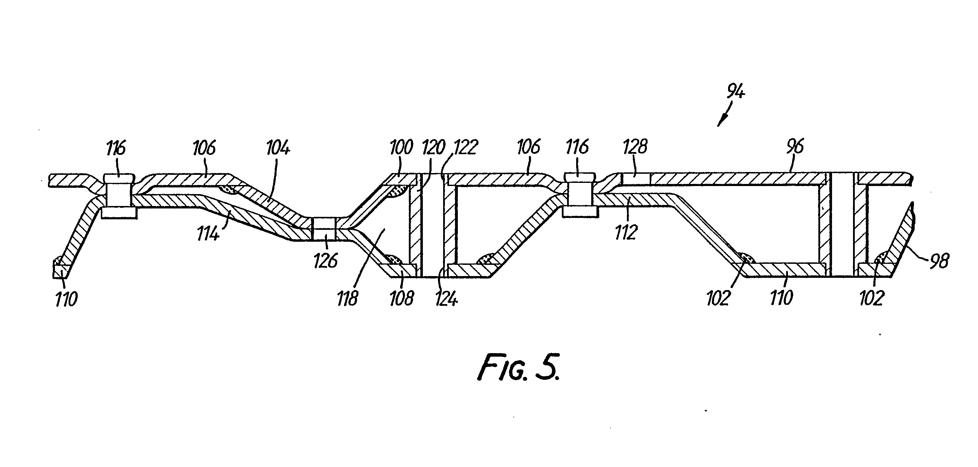

The adaptor ring 8 is shown in greater detail in Figure 2. The adaptor ring 8 comprises a cast metallic body, typically of aluminium, which is machined to the required shape and dimensions. The adaptor ring has two opposed faces 40, 42 which are adapted to engage the cover assembly 10 and the flywheel 4 and these faces 40, 42 need to be machined to close tolerances. The adaptor ring 8 also has a number of machined holes 44 for receiving the bolts 12 which fix the cover assembly 10 and the adaptor ring 8 to the flywheel 4 and a number of machined holes 46 for receiving dowels 48 for locating the cover assembly 10 in position relative to the adaptor ring 8. The adaptor ring 8 also is provided with a series of holes 50 into which bolts 52 are received, these bolts 52 being adapted to fix straps 54 which are fixed to the intermediate pressure plate 14. The intermediate pressure plate 14 includes centralising pins 56 which compensate for the wear of the driven plates 16, 20. The adaptor ring 8 requires substantial and accurate machining in the region where the strap driven intermediate pressure plate 14 is mounted.

Typically, the adaptor ring 8 is manufactured in aluminium in order to reduce the weight of the clutch. However, this has the disadvantage that aluminium is expensive and also the adaptor ring requires a great deal of machining in order to achieve the necessary tolerances on all the functioning faces of the adaptor ring 8.

In addition, the known adaptor ring has been found to have insufficient ventilating capacity for the intermediate pressure plate so as to prevent overheating of the intermediate pressure plate.

The present invention aims to overcome the above-described disadvantages of the known adaptor ring.

Accordingly, the present invention provides a mounting for a pressure plate of a friction clutch, the mounting being adapted to be fixed between a cover assembly of the friction clutch and a flywheel, the mounting comprising first and second annular members of sheet material, which members have axially contoured surfaces, means for connecting the second annular member in opposed relation to the first annular member, the annular members being connected together such that spaces are provided therebetween for ventilating the clutch, and means for connecting the pressure plate to the mounting.

Each annular member may comprise a pressing of sheet metal.

Alternatively, each annular member may comprise a plurality of sheet sections welded together.

The connecting means may comprise rivets.

The mounting may further comprise a plurality of tubular spacers, each of which is disposed between the annular members and is aligned with respective holes in the annular members thereby to permit a bolt,which fixes the cover assembly to the flywheel, to be passed through the mounting.

The mounting may still further comprise balance weights which are attached to the annular member.

Additionally, the mounting may further comprise a first locating means for locating the mounting in a desired position relative to the cover assembly.

Preferably, the first locating means comprises a plurality of axially extending members which are adapted to be located in respective corresponding holes in the cover assembly.

Still further, the mounting may further comprise a second locating means for locating the mounting in a desired position relative to the flywheel.

Preferably, the second locating means comprises a plurality of axially extending members which are adapted to be located in respective corresponding holes in the flywheel.

In a preferred arrangement, at least one of the inner and outer annular edges of the or each annular member is provided with one or more axially directed integral strengthening ribs.

The present invention further provides a friction clutch comprising a mounting in accordance with the present invention.

An embodiment of the present invention will now be described by way of example only with reference to the accompanying drawings, in which:-

Figure 1 is a sectional view of a known twin plate friction clutch;

Figure 2 is a sectional view of a part of the known adaptor ring which is comprised in the known plate friction clutch of Figure 1;

Figure 3 is a part-sectional view, similar to Figure 2, of part of an adaptor ring of a first embodiment of the present invention;

Figure 4 is a section on line X-X of Figure 3; and

Figure 5 is a part-sectional view, similar to Figure 3, of part of an adaptor ring of a second embodiment of the present invention.

Figures 3 and 4 each show approximately one third of an adaptor ring in accordance with first and second embodiments of the present invention, respectively.

Referring to Figure 3, an adaptor ring 60 in accordance with a first embodiment of the present invention comprises a top pressing 62 of an annular ring of sheet steel and a bottom pressing 64 of an annular ring of sheet steel. Each ring is, in a preferred arrangement, when the diameter of the ring is 240 mm, 21 mm wide. Each pressing 62, 64 has been pressed into the desired shape so as to have an axially contoured surface. The pressings 62, 64 have respective outer surfaces 66, 68 which are shaped respectively to engage the cover assembly 10 and the flywheel 4. The top and bottom pressings 62, 64 are mounted in opposed relation and are connected together by a series of rivets 70. Between the connected regions, the two pressings 62, 64 diverge to provide spaces 72 therebetween, and in some of the areas between the connected regions the top and bottom pressings 62, 64 have opposed parallel portions which in use are fixed against the cover assembly 10 and the flywheel 4 respectively. A series of tubular pillars 74 are disposed between the top and bottom pressings 62, 64 in the regions thereof where the top and bottom pressings 62, 64 are fixed to the cover assembly 10 and the flywheel 4. The pillars 74 are preferably of steel and constitute spacers for the top and bottom pressings, 62, 64, the spacers acting to increase the strength and rigidity of the adaptor ring 60. The ends of the pillars 74 are located in respective circular holes 76, 78 in the top and bottom pressings 62, 64. In use, bolts are passed through the cover assembly 10 and the pillars 74 and are threaded into the flywheel 4 thereby securely to mount the cover assembly 10 and the adaptor rang 60 to the flywheel 4.

The intermediate pressure plate sub-assembly 80 is strap mounted on the adaptor ring 60. In greater detail , the intermediate pressure plate sub-assembly 80 has a plurality of driving straps 82 affixed thereto and the driving straps 82 are fixed to the adaptor ring 60 by means of respective rivets 84. It will also be seen that the intermediate pressure plate sub-assembly 80 is provided with a centralising pin 86. One of the rivets 70 is located above each centralising pin 86 so that the head of the rivet 70 acts as a "stop" for the centralising pin 86.

Balance weights 87 are fixed, e.g. by riveting, to the inclined portions of the bottom pressing 64 thereby accurately to balance the adaptor ring 60.

A series of dowels 88 are mounted on the top pressing 62 and extend axially outwardly therefrom. The dowels 88 are adapted to be located in respective corresponding holes in the cover assembly 10 thereby to locate the adaptor ring 60 in a desired position relative to the cover assembly 10.

Similarly, a series of dowels 90 are mounted on the bottom pressing 64 and extend axially outwardly therefrom. The dowels 90 are adapted to be located in respective corresponding holes in the flywheel 4 thereby to locate the adaptor ring 60 in a desired position relative to the flywheel 4.

In a preferred arrangement, at least one of the inner and outer annular edges of one or both pressings 62, 64 is provided with one or more axially directed integral strengthening ribs 92. This is shown in Figure 4. As may be seen from Figure 4, folded over ribs 92 may be provided on the inner and outer edges of the top and bottom pressings 62, 64. The ribs 92 extend around only part of the pressings 62, 64. The ribs 92 increase the strength and rigidity of the adaptor ring 60. In particular, the ribs 92 give added rigidity to, or can reduce the number of, the regions in which the top and bottom pressings 62, 64 are separated. Also, the ribs 92 can permit the use of thinner sheet material for the pressings 62, 64. The folded over edges may be of any combination of the inner and outer edges of either or both of the top and bottom pressings 62, 64, and at any point of the circumference.

Figure 3 shows approximately one third of the adaptor ring of the present invention and it will be understood that the whole adaptor ring comprise six pillars 74, six rivets 70 (of which three act as a "stop" for a respective centralising pin 86), three rivets 84, three dowels 88 and three dowels 90.

The adaptor ring 60 is manufactured by forming the top and bottom pressings 62, 64. The holes 76, 78 are accurately pierced in the pressings 62, 64. The pillars 74 are positioned between the pressings 62, 64 and then the pressings 62, 64 are riveted together by means of the rivets 70. After riveting, the top face of the top pressing 62 and the bottom face of the bottom pressing 64 are machined to achieve the necessary height of the adaptor ring 60, this machining being employed as normal pressing tolerances are not sufficiently high to produce an adapter ring with the correct height. In addition, the head of each of those three rivets 70 which is positioned above a respective centralising pin 86 is spot-faced so as to achieve a critical height from the machined face of the bottom pressing 64. The dowels 88 and 90 are mounted in the pressings 62, 64. The straps 82 are then riveted in place by the rivets 84 and then the adaptor ring 60 may be assembled into the clutch. The balance weights 87 may be riveted in position at any convenient stage in the manufacturing process.

Figure 5 shows an adaptor ring according to a second embodiment of the present invention. The adaptor ring 94 is similar to that shown in Figure 3 but each annular member 96, 98 of the adaptor ring 94 comprises a number of metal sections 100 which have been welded together by welds 102. In the embodiment shown, the top annular member 96, which is, in use, disposed against the clutch cover (not shown), comprises three axially contoured metal sections 104 and three substantially flat metal sections 106. Each axially contoured section 104 connects two adjacent flat sections 106 by respective welds 102. The bottom annular member 98 comprises three of each of two types of flat metal sections 108,110 and three of each of two types of axially contoured metal sections 112,114. The various components of the bottom annular member 98 are welded together by welds 102 in a series wherein a first type of axially contoured section 112 is connected at one end to a first type of flat section 108 which in turn is connected to the second type of axially contoured section 114 which is in turn connected to the second type of flat section 110. It will be apparent to the skilled man that only one particular type of adaptor ring is illustrated and that the shape, dimensions and position of the sections can vary depending on the shape and dimensions of the adaptor ring required.

The top and bottom annular members 96, 98 are mounted in opposed relation and are connected together by a series of rivets 116. Between the connected regions, the two annular members 96, 98 diverge to provide spaces 118 therebetween, and in some of the areas between the connected regions the top and bottom annular members 96, 98 have opposed parallel portions, formed by the substantially flat metal sections 106,108,110, which in use are fixed against the cover assembly 10 and the flywheel 4 respectively. A series of tubular pillars 120 are disposed between the top and bottom annular members 96, 98 in the regions thereof where the top and bottom annular members 96, 98 are fixed to the cover assembly 10 and the flywheel 4. The pillars 120 are preferably of steel and constitute spacers for the top and bottom annular members 96, 98 the spacers acting to increase the strength and rigidity of the adaptor ring 60. The ends of the pillars 120 are located in respective circular holes 122,124 in the top and bottom annular members 96, 98. In use, bolts are passed through the cover assembly 10 and the pillars 120 and are threaded into the flywheel 4 thereby securely to mount the cover assembly 10 and the adaptor ring 94 to the flywheel 4.

The intermediate pressure plate sub-assembly (not shown) is mounted on the adaptor ring 94. In greater detail , the intermediate pressure plate sub-assembly has a plurality of driving straps affixed thereto, the driving straps being affixed to the adaptor ring 94 by means of respective rivets (not shown), the rivets being secured in respective holes 126 in the adaptor ring. One of the rivets 116 is located above each centralising pin of the intermediate pressure plate sub assembly, the said rivets acting as a "stop" for the centralising pin.

Balance weights (not shown) may be fixed, e.g. by riveting, to the inclined portions of the bottom annular member 98 thereby accurately to balance the adaptor ring 94.

A series of dowels (not shown) are mounted in respective holes 128 in the top annular member 96 and extend axially outwardly therefrom. The dowels are adapted to be located in respective corresponding holes in the cover assembly 10 thereby to locate the adaptor ring 94 in a desired position relative to the cover assembly 10.

In a preferred arrangement, at least one of the inner and outer annular edges of one or both annular members 96, 98 is provided with one or more axially directed integral strengthening ribs 92. This is shown in Figure 4. As may be seen from Figure 4, the folded-over ribs 92 may be provided on the inner and outer edges of the top and bottom annular members 96, 98. The ribs 92 extending around only part of the annular members 96, 98. The ribs 92 increase the strength and rigidity of the adaptor ring 94. In particular, the ribs 92 give added rigidity to, or can reduce the number of, the regions in which the top and bottom annular members 96, 98 are separated. Also, the ribs 92 can permit the use of thinner sheet material for the annular members 96, 98. The folded-over edges may be of any combination of the inner and outer edges of either or both of the top and bottom annular members 96, 98, and at any point of the circumference.

Figure 5 shows approximately one third of the adaptor ring of the present invention and it will be understood that the whole adaptor ring comprises six pillars 120 and six rivets 116 (of which three act as a "stop" for a respective centralising pin).

The adaptor ring of the present invention provides a number of advantages over the known adaptor ring.

The adaptor ring of the present invention provides greatly increased ventilation of the clutch by virtue of the spaces between the pressings. The increase is of the order of 100% compared to the illustrated known clutch. The ventilation removes heat from the clutch which accordingly minimises facing wear and hence increases clutch life. It is known that the thermal capacity of the intermediate pressure plate is of extreme importance when evaluating a twin clutch and it is difficult to achieve sufficient heat sink capacity within the intermediate pressure plate. This leads to increased operating temperatures of the intermediate pressure plate, which increases facing wear and thereby reduces clutch life. By providing increased ventilation, the adaptor ring of the present invention overcomes the inherent disadvantage of the lack of heat sink capacity of the intermediate pressure plate.

Furthermore, the pressed adaptor ring is much lighter than the known aluminium adaptor ring. The illustrated adaptor ring of the present invention is 0.8 kg in weight compared to 1.125 kg for the illustrated aluminium adaptor ring. This gives a weight saving, and corresponding inertia saving, of around 30%. Reduction of the weight and inertia of clutches is continuously being sought in clutch manufacture.

In the adaptor ring, strength and rigidity is provided by the angled pressings and compressive stiffness is provided by the pillars. These may vary according to the application and stiffness required. In addition, the thickness of the pressings can be varied dependent upon the required strength.

Furthermore, the adaptor ring is accurately located relative to the flywheels by the dowels 90. In contrast, the known adaptor ring is located by a spigot which is required to be machined to very close tolerances in the flywheel .

When compared to the machined adaptor ring, the present adaptor ring is much less prone to damage during and between assembly operations, thereby reducing the frequency of rejected parts and malfunction in use. High, consistent accuracy in the forming of the holes in the pressings can be achieved by piercing the holes in the pressings after they have have been pressed to the desired configuration. The pressings are easily assembled by riveting. In additon, the balance weights can be riveted to pre-pierced holes in the angled portions of the pressings and this leads to improved balance when compared to the known method of drilling of the intermediate pressure plate of the known clutch in order to balance the clutch. This latter method is relatively inaccurate. Also, in the present invention, the straps of the intermediate pressure plate assembly are easily attached by riveting, whereas in the known clutch threaded bolts are required to attach the straps and this requires "torqued-up" bolts which leads to the inherent problem of over-straining the threads in the cast aluminium adaptor ring.

A further advantage of the present invention is that the pressed adaptor ring is considerably less expensive to manufacture than the known machined aluminium adaptor ring. Typically, the cost is reduced by a factor of about three.

A further advantage of the present invention is that when the annular members of the adaptor ring comprise a plurality of metal sections welded together the metal sections may be made in a number of standard shapes and sizes and may be combined in a variety of ways to form a large number of different adaptor rings of different sizes and configurations suitable for different vehicles.

Yet another advantage of the welded arrangement is that it eliminates the need for some of the complicated tooling which is required to manufacture the fully-pressed adaptor rings.

## Claims

1. A mounting for a pressure plate of a friction clutch, the mounting being adapted to be fixed between a cover assembly of the friction clutch and a flywheel, the mounting comprising first and second annular members of sheet material, which members have axially contoured surfaces, means for connecting the second annular member in opposed relation to the first annular member, the annular members being connected together such that spaces are provided therebetween for ventilating the clutch, and means for connecting the pressure plate to the mounting.

2. A mounting according to Claim 1 wherein each annular member comprises a plurality of metal sections welded together.

3. A mounting according to Claim 2 wherein one or more of the metal sections have been pressed.

4. A mounting according to Claim 1 wherein each annular member comprises a pressing of sheet metal .

5. A mounting according to any foregoing claim wherein the connecting means comprises rivets.

6. A mounting according to any foregoing claim further comprising a plurality of tubular spacers, each of which is disposed between the annular members and is aligned with respective holes in the annular members thereby to permit a bolt, for fixing the cover assembly to the flywheel, to be passed through the mounting.

7. A mounting according to any foregoing claim further comprising balance weights which are attached to at least one of the annular members.

8. A mounting according to any foregoing claim further comprising a first locating means for locating the mounting in a desired position relative to the cover assembly.

9. A mounting according to Claim 8 wherein the first locating means comprises a plurality of axially extending members which are adapted to be located in respective corresponding holes in the cover assembly.

10. A mounting according to any foregoing claim further comprising a second locating means for locating the mounting in a desired position relative to the flywheel.

11. A mounting according to Claim 10 wherein the second locating means comprises a plurality of axially extending members which are adapted to be located in respective corresponding holes in the flywheel.

12. A mounting according to any foregoing claim wherein at least one of the inner and outer annular edges of each annular member is provided with one or more axially directed integral strengthening ribs.

13. A friction clutch comprising a mounting as claimed in any foregoing claim.

14. A friction clutch according to Claim 13 which is a twin plate friction clutch and wherein the mounting mounts the intermediate pressure plate of the friction clutch.

*FIG. I.*

FIG.2.

FIG.3.

FIG.4.

FIG. 5.

EP 0 295 902 A2